# EUROPEAN PATENT SPECIFICATION

(11) **EP 2 523 445 B1**
(45) Date of publication and mention of the grant of the patent: **17.11.2021**
(21) Application number: 12163897.7
(22) Date of filing: 12.04.2012
(51) Int. Cl.: H04N 1/00, H04N 1/32

(54) **Image forming apparatus, method of controlling the same and program**
Bilderzeugungsvorrichtung, Verfahren zu ihrer Steuerung und Programm
Appareil de formation d'image, son procédé de contrôle et programme

(30) Priority: 09.05.2011 JP 2011104736
(43) Date of publication of application: 14.11.2012
(73) Proprietor: Canon Kabushiki Kaisha, Tokyo 146-8501 (JP)
(72) Inventor: Usui, Keiko, Tokyo, Tokyo 146-8501 (JP)
(74) Representative: TBK

(56) References cited:
- JP-A- 2001 285 539
- JP-A- 2002 010 001
- US-A1- 2005 286 090
- US-A1- 2006 023 262

## Description

### BACKGROUND OF THE INVENTION

### Field of the Invention

The present invention relates to an image forming apparatus having a facsimile (FAX) reception function, a method of controlling the same, and a program.

### Description of the Related Art

Recently, in the field of compact image forming apparatuses, the products are required to not only be cost-competitive but also have much smaller sizes and higher functionality. In addition, since personal computers (PCs) and networks have become widespread, making a PC and an image forming apparatus cooperate and provide more convenient functions has been examined. For example, there is a function of enabling a PC to send image data to an image forming apparatus incorporating a FAX function and making the image forming apparatus send the image data to a FAX line as a FAX image. There also exists a function of, reversely, causing an image forming apparatus to send image data received from a FAX line to a PC and making the PC use the image data without printing.

For example, Japanese Patent Laid-Open No. 2006-041910 describes an arrangement in which, when received FAX data is untransferred to a PC, the number (the current time and date) of untransferred data that are stored is displayed on a display. According to this literature, a designation can be done to transfer, to the PC, only data selected by the user from the received data and prohibit printing of unnecessary data.

In Japanese Patent Laid-Open No. 2006-041910, a dedicated driver not to print a facsimile-received image is installed in a PC. When the driver is activated in the PC, the image forming apparatus can search for the PC with the driver installed by polling. Driver settings on the PC side include designations of a FAX data storage destination and a data storage format. Upon detecting reception of FAX data, the driver makes an icon displayed on the task bar flick to notify the user of the presence/absence of the received data.

As will be described later, the FAX function of sending a received FAX image to a PC according to an embodiment of the present invention also uses a driver dedicated to the FAX function in a PC, as in Japanese Patent Laid-Open No. 2006-041910.

The conventional FAX function includes a function called forced memory reception (willful intercept). The forced memory reception is a function of prohibiting automatic printing of a received image and also prohibiting printing of an output report (reception result).

In this forced memory reception mode, all facsimile-received data are accumulated in the memory. When the forced memory reception mode is canceled, the received images and the report are automatically printed. This function is used to, for example, prohibit printing of a FAX image received at night, and enables to print a received FAX image as needed.

When the forced memory reception mode is canceled, all data received during that mode are printed. At this time, the output destination of the accumulated data cannot be designated arbitrarily. For this reason, if an error such as paper-out or toner-out occurs at the output destination, the forced memory reception mode cannot be canceled. In the normal FAX reception mode, the user can designate a plurality of output destinations. In the forced memory reception mode, however, the received data output destination is fixed.

An inexpensive image forming apparatus has a small memory capacity, and the number of receivable FAX jobs is therefore limited. If the number of received jobs exceeds the maximum number, the apparatus does not accept new facsimile-received data (does not connect the facsimile apparatus). Hence, if the forced memory reception mode cannot be canceled, FAX reception may be impeded. Furthermore, received FAX data is stored in a volatile RAM and therefore lost upon power-on/off.

The US 2006/023262 A1 discloses a multi function device (MFD) having a function of a facsimile device and a function of a non-facsimile device, the multi function device being connectable to a terminal device (PC) that can perform a data communication. The multi function device may further include a backup recording system that records an image corresponding to the data received by the data receiving system on a recording medium if the data transmission setting system sets that the data received by the data receiving system is to be transmitted to the terminal device. When a backup print setting is turned ON, if the MFD is in a condition where the printing can be performed by the printer unit but the data cannot be transmitted to the PC, an image corresponding to the FAX data stored in the PC-FAX memory as the received FAX data (or the untransmitted FAX data) is printed, by the printer unit, on the recording sheet. Thus, even if the received FAX data or the untransmitted FAX data cannot be transmitted to the PC, the user can review the contents of the received FAX data (or the untransmitted FAX data) since it is printed on the recording sheet. The MFD may be configured such that, if the user reviews the thus printed image on the recording sheet, and judges that transmission of the data to the PC is unnecessary, the data can be deleted from the RAM (PC-FAX memory) in response to a predetermined operation. The JP 2001 285539 A discloses a multi-functional peripheral device which outputs reception data to an output destination device designated by an operator, in the case that this data cannot be printed. When data, received by an MFD cannot be printed and is stored as vicarious reception data, a message of 'the presence of vicarious reception data ' and a button of 'vicarious data output' are displayed, and an output destination device designation image is displayed on an LCD instead of an output processing image when the button is operated. A PC is designated as the output destination device of vicarious reception data, when a button of 'PC' in the output destination device designation image is operated by an operator. Another facsimile equipment is designated as the output destination device, when a 'FAX' button in the image is operated, and a smart medium is designated as the output destination device, when a button of 'smart medium' in the output destination device designation image is operated. Further prior art is known from US 2005/286090.

### SUMMARY OF THE INVENTION

The present invention solves the problems of the above-described related art.

The present invention provides a technique of transferring received data accumulated in a memory to a designated output destination upon canceling a memory reception mode.

The present invention also provides a technique of designating the output destination of each received data accumulated in a memory and outputting each received data to the designated output destination upon canceling a memory reception mode.

According to the present invention, there are provided an image forming apparatus and an image forming apparatus control method according to the appended claims.

According to the present invention, it is possible to output received data accumulated in a memory to a designated output destination upon canceling a memory reception mode.

It is also possible to designate the output destination of each received data accumulated in a memory and output each received data to the designated output destination upon canceling a memory reception mode.

Further features of the present invention will become apparent from the following description of exemplary embodiments (with reference to the attached drawings). The invention is set out in the appended set of claims.

### BRIEF DESCRIPTION OF THE DRAWINGS

Fig. 1 is a block diagram showing the hardware arrangement of an image forming apparatus according to the first embodiment;
Fig. 2 is a plan view of the operation panel of the image forming apparatus according to the first embodiment;
Figs. 3A to 3D show views of examples of FAX function screens displayed on the display unit of the operation panel;
Figs. 4A to 4C show views of examples of screens for communication management setting in the image forming apparatus;
Figs. 5A and 5B show views of examples of screens for memory reception setting;
Figs. 6A to 6F show views of examples of screens upon canceling a memory reception mode according to the first embodiment;
Figs. 7A to 7E show views of examples of popup screens displayed upon canceling the memory reception mode in correspondence with Figs. 6A to 6F;
Fig. 8 is a flowchart for explaining processing of setting a mode to transfer received FAX data to a PC in the image forming apparatus according to the first embodiment;
Fig. 9 is a flowchart for explaining processing of setting the memory reception mode in the image forming apparatus according to the first embodiment;
Fig. 10 is a flowchart for explaining FAX reception processing in the image forming apparatus according to the first embodiment;
Fig. 11 is a flowchart for explaining image output processing by the image forming apparatus;
Fig. 12 is a flowchart for explaining processing of the PC according to the first embodiment;
Fig. 13 is a flowchart for explaining processing when a user has instructed to cancel the memory reception mode in the image forming apparatus according to the first embodiment;
Fig. 14 is a flowchart for explaining processing when a user has instructed to cancel a memory reception mode in an image forming apparatus according to the second embodiment;
Figs. 15A to 15F shows views for explaining examples of screens displayed on an operation panel according to the second embodiment; and
Fig. 16 is a view for explaining a display example on the operation panel based on status check in step S1403 of Fig. 14.

### DESCRIPTION OF THE EMBODIMENTS

Hereinafter, embodiments of the present invention will be described in detail with reference to the accompanying drawings. It should be noted that the following embodiments are not intended to limit the scope of the appended claims, and that not all the combinations of features described in the embodiments are necessarily essential to the solving means of the present invention.

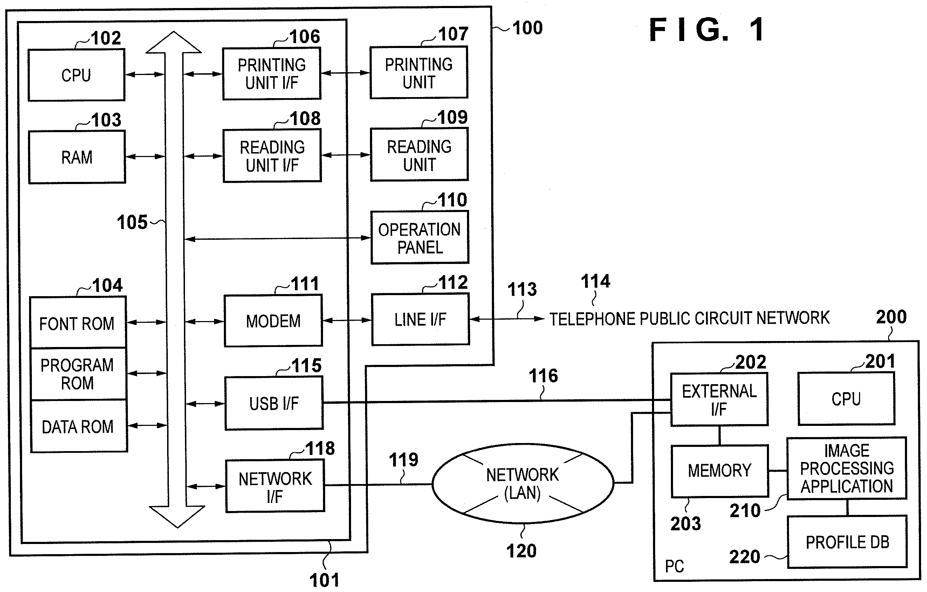

Fig. 1 is a block diagram showing the hardware arrangement of an image forming apparatus 100 according to the first embodiment of the present invention. Each block represents a module, and the arrows between the blocks represent the flow of data or instructions.

The image forming apparatus 100 includes a printing unit 107, a reading unit 109, an operation panel 110, a line interface (I/F) 112, and a controller 101 for controlling them. The controller 101 includes a CPU 102, a RAM 103, a ROM 104, a printing unit I/F 106, a reading unit I/F 108, a MODEM 111, a USB I/F 115, and a network I/F 118. These units are connected through a system bus 105. The CPU 102 comprehensively controls the operations of the above-described units in accordance with various control programs. The various control programs are stored in the program ROM of the ROM 104. The CPU 102 reads out and executes the control programs. Alternatively, the CPU 102 decompresses and expands, on the RAM 103, data compressed and stored in the program ROM of the ROM 104, thereby executing the above-described various control programs. Otherwise, the above-described various control programs may be compressed/uncompressed and stored in a hard disk drive (HDD) (not shown) so that the CPU 102 expands and executes them on the RAM 103 at the time of execution.

The network I/F 118 performs communication processing with a host computer (information processing apparatus) 200 (PC in Fig. 1) through a network (for example, LAN) 120. The network I/F 118 and the network 120 are connected through a communication cable such as a LAN cable 119. The MODEM 111 is connected to a telephone public circuit network 114 through the line I/F 112 to perform communication processing with another image forming apparatus, a facsimile apparatus, a telephone set, or the like (not shown). The line I/F 112 and the telephone public circuit network 114 are generally connected through a telephone line 113. The PC 200 may be connected to the image forming apparatus 100 through a USB cable 116 or may be capable of communicating with the image forming apparatus 100 by wireless communication or the like.

The printing unit I/F 106 serves as an interface to output an image signal to the printing unit 107 (printer engine). The reading unit I/F 108 serves as an interface to input an image signal obtained by reading a document from the reading unit 109 (scanner engine). The CPU 102 processes the image signal input from the reading unit I/F 108 and outputs the image signal to the printing unit I/F 106 as the image signal for printing.

The CPU 102 also displays characters or symbols on the display unit of the operation panel 110 using font information stored in the font ROM of the ROM 104, or receives instruction information from the operation panel 110 that has received a user instruction. The CPU 102 stores the device information of the image forming apparatus 100, the telephone number list information and department management information of the user, and the like in the data ROM of the ROM 104. The CPU 102 reads out the pieces of information as needed, and updates them as needed.

In Fig. 1, the reading unit 109 and the printing unit 107 are provided in the copying machine 100. However, one or both of them may be provided outside.

The PC 200 includes a CPU 201. The CPU 201 controls the units of the PC 200 by executing programs. An external I/F 202 communicates with another apparatus. A memory 203 accumulates data input through the external I/F 202 or temporarily stores data to be sent through the external I/F 202. An image processing application 210 performs image processing corresponding to the settings in a profile DB 220, or manages profile data.

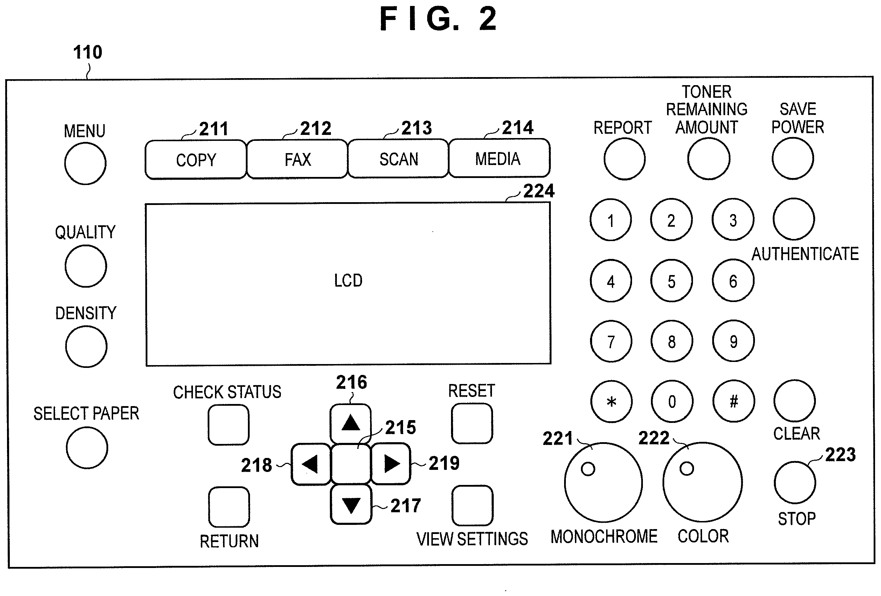

Fig. 2 is a plan view of the operation panel 110 of the image forming apparatus 100 according to the first embodiment.

Function keys 211 to 214 correspond to "copy", "fax", "scan", and "media print" jobs, respectively. When the user presses one of the function keys, display of a display unit 224 transitions to the basic screen of the corresponding job. The selected function (job) is explicitly indicated by lighting the corresponding function key.

An OK key 215 is used to select an item. Arrow keys 216 to 219 correspond to the up, down, left, and right directions, respectively, and are used to move an item. The display unit (LCD) 224 displays an operation screen. A monochrome start key 221 lights up in a press enable state and is used to instruct to start copy, document reading, FAX send, or the like in the monochrome mode. A color start key 222 lights up in a press enable state and is used to instruct to start copy or document reading in the color mode. At the time of FAX send, only the monochrome start key 221 lights up. A stop key 223 is used to instruct to, for example, stop a job.

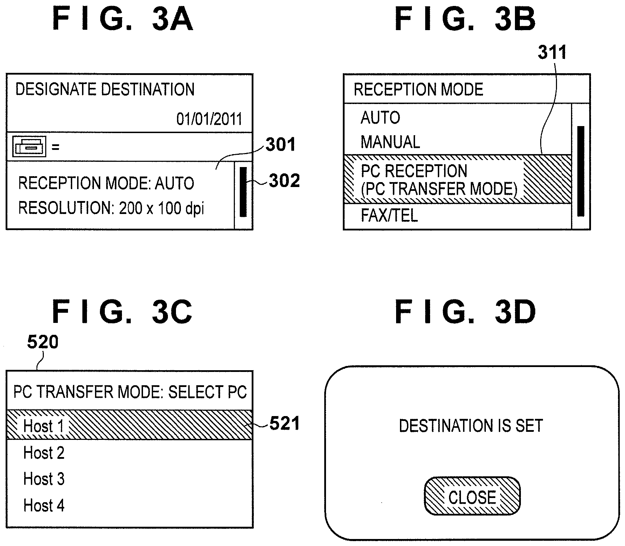

Figs. 3A to 3D show views of examples of a FAX function screen displayed on the display unit 224 of the operation panel 110 of the image forming apparatus 100.

Fig. 3A is a view showing an example of the FAX function screen displayed on the display unit 224 of the operation panel 110.

Fig. 3A represents the basic screen of the FAX function including five lines. The first line displays the current state. The second line displays the current date and time. The third line is used to input the FAX send destination. Destination input is enabled by pressing the OK key 215. The fourth and fifth lines display an operation mode item 301 that can be designated in the FAX job. If the information cannot completely be displayed in the screen, a scroll bar 302 to instruct to scroll the screen is displayed on the right side.

Fig. 3B shows an example of the screen of the reception mode that is one of the operation mode items of the FAX function. "PC reception mode (PC transfer mode)" 311 is designated by the cursor. When the user presses the OK key 215 in the state shown in Fig. 3B, the display transitions to a PC transfer mode selection screen (Fig. 3C).

Note that in the PC transfer mode, facsimile-received data is transferred to a registered PC. After the FAX data transfer, the received data is deleted from the memory (RAM 103) of the image forming apparatus 100.

Fig. 3C shows an example of the PC selection screen in the PC transfer mode. If a network failure or a driver setting error occurs, the names of PCs and the like are not displayed on the screen. Only the names of PCs from which a polling packet has received are displayed. In Fig. 3C, "Host1" is selected as the transfer destination PC.

Fig. 3D shows an example of a popup screen after the user has selected the host PC of the transfer destination and completed the settings.

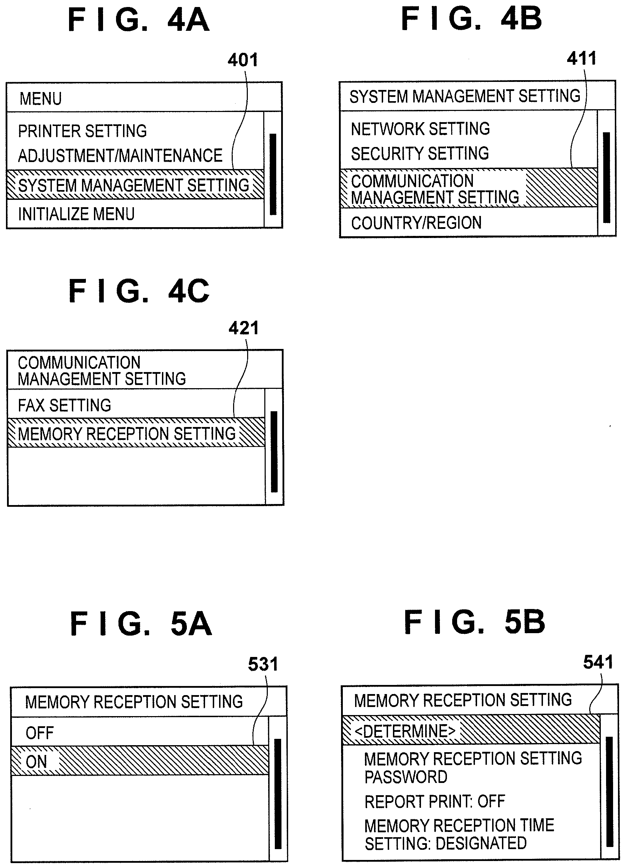

Figs. 4A to 4C show views of examples of screens for communication management setting in the image forming apparatus 100 according to this embodiment.

Fig. 4A shows a menu screen in which "system management setting" 401 is displayed among the menu items.

Fig. 4B shows an example of a system management setting screen in which "communication management setting" 411 is displayed among the system management items. When the user presses the OK key 215 in this screen, the display transitions to a communication management setting screen (Fig. 4C).

Fig. 4C shows an example of the communication management setting screen in which "FAX reception setting" and "memory reception setting" 421 are displayed among the items.

Figs. 5A and 5B show views of examples of screens for memory reception setting.

Fig. 5A shows an example of a screen for the memory reception setting. When the user places the cursor on "ON" 531 and presses the OK key 215, the display transitions to a detailed screen for the memory reception setting shown in Fig. 5B.

Fig. 5B is a view showing an example of an advanced setting screen for the memory reception setting. When the user selects "determine" 541 in the second line, as shown in 5b, and presses the OK key 215, the memory reception is set.

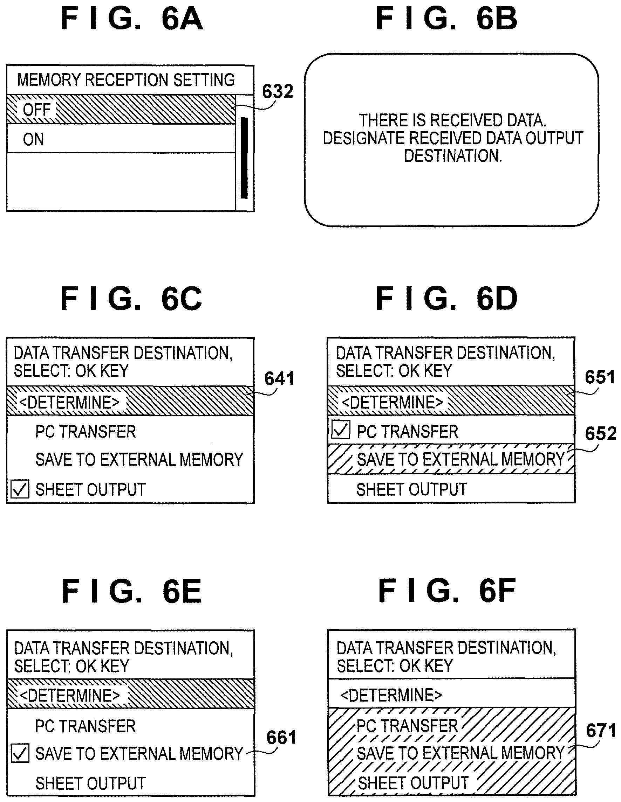

Figs. 6A to 6F show views of examples of screens upon canceling the memory reception mode according to this embodiment.

Fig. 6A shows the screen for the memory reception setting. When the user moves the cursor to "OFF" 632 and presses the OK key 215, the memory reception setting is canceled.

Fig. 6B shows an example of a popup screen displayed when received data has been stored in the memory of the image forming apparatus 100 at the time of memory reception setting cancel in Fig. 6A. Since received data exists, a message is displayed to prompt the user to designate the output destination of the received data.

Fig. 6C shows an example of a screen to display the data sending destinations (output destinations) (when all output destinations can be designated) after the display in Fig. 6B. In Fig. 6C, the user selects "sheet" as the data output destination and further selects "determine" 641, thereby deciding the data output destination to the sheet.

Fig. 6D shows another example of the screen to display the data transfer destinations (output destinations) (when save to the external memory is impossible) after the display in Fig. 6B. In Fig. 6D, the user selects "PC" as the data output destination and further selects "determine" 651, thereby deciding the data output destination to the PC. Note that if an output destination is unselectable, its name ("save to external memory" in Fig. 6D) grays out (652).

Fig. 6E shows still another example of the screen to display the data transfer destinations (when all transfer output destinations can be designated) after the display in Fig. 6B. In this case, "save to external memory" 661 is designated as the data transfer destination.

Fig. 6F shows still another example of the screen to display the data transfer destinations (when no data transfer output destination is selectable) after the display in Fig. 6B. In Fig. 6F, all transfer destinations gray out, as indicated by 671. In this case, an error message may be displayed in a popup screen to notify the user. Note that an arbitrary error notification method can be adopted.

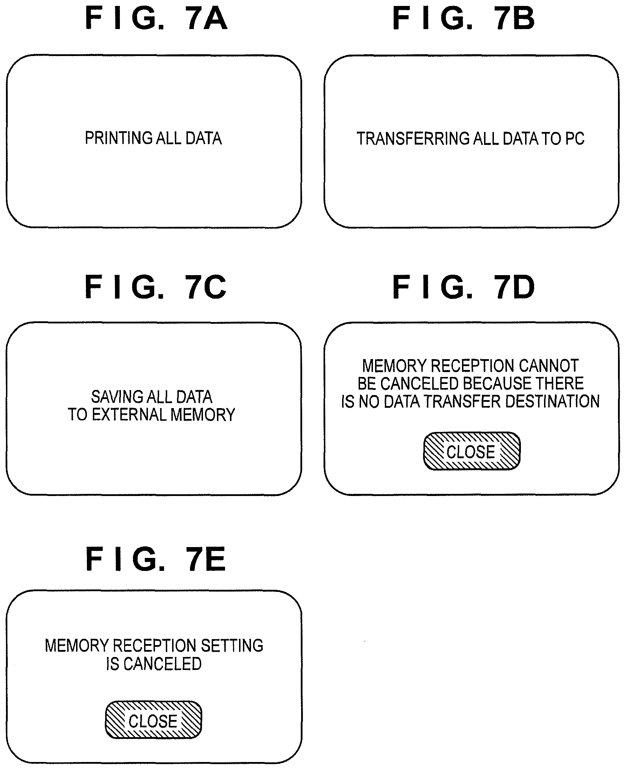

Figs. 7A to 7E are views showing examples of popup screens displayed upon canceling the memory reception mode in correspondence with Figs. 6C to 6F.

Fig. 7A shows a popup screen corresponding to Fig. 6C, which displays a message representing that all data are being printed. Fig. 7B shows a popup screen corresponding to Fig. 6D, which displays a message representing that all data are being transferred to the PC. Fig. 7C shows a popup screen corresponding to Fig. 6E, which displays a message representing that all data are being saved to the external memory. Fig. 7D shows a popup screen corresponding to Fig. 6F, which displays a message representing that the memory reception mode cannot be canceled because no data transfer destination can be designated. Fig. 7E shows an example of a screen that displays a message representing that the memory reception mode could be canceled.

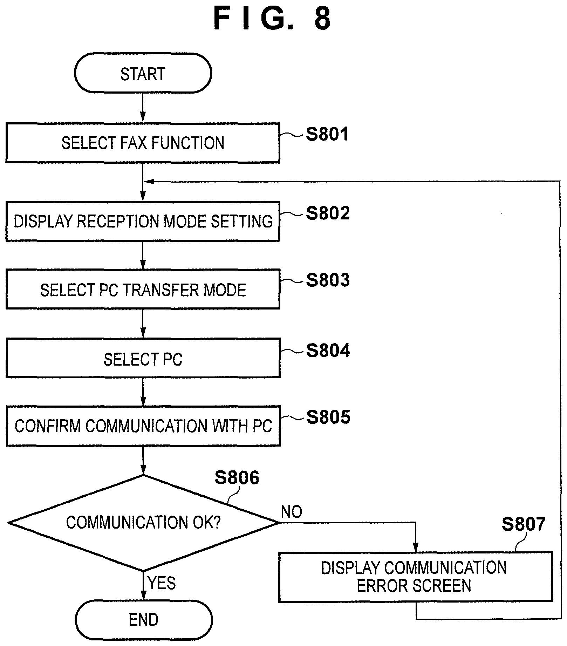

Fig. 8 is a flowchart for explaining processing of setting a mode to transfer received FAX data to a PC in the image forming apparatus 100 according to the embodiment. The program to execute this processing is stored in the program ROM of the ROM 104 and executed under the control of the CPU 102.

This processing starts upon powering on the image forming apparatus 100. In step S801, the user presses the FAX key 212 of the operation panel 110 to display the top screen (Fig. 3A) of the FAX function. In step S802, the reception mode setting screen (Fig. 3B) out of the menu items in the FAX function top screen is displayed. The process advances to step S803. When the user selects the "PC reception" 311 from the items in the reception mode setting screen and presses the OK key 215, the PC transfer mode to transfer facsimile-received data to a PC is set. The process advances to step S804 to display the screen shown in Fig. 3C to select the transfer destination PC. A list of PCs connected to the image forming apparatus 100 is displayed, and the user selects one PC from the list. Note that the image forming apparatus 100 periodically performs polling to the connected PCs, and only PCs for which polling packet reception have detected are displayed on the display unit 224. The process advances to step S805 to establish communication with the selected PC. If the communication is established, the processing ends. Otherwise, the process advances to step S807 to display a message representing that a communication error has occurred, and then returns to step S802.

In this way, the user can set the mode to transfer received FAX data to a PC and designate the PC of the transfer destination.

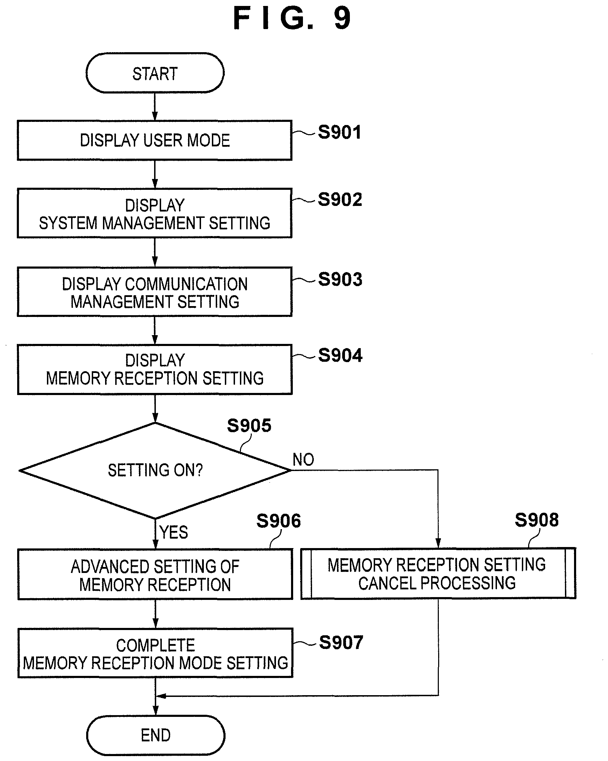

Fig. 9 is a flowchart for explaining processing of setting the memory reception mode in the image forming apparatus 100 according to this embodiment. The program to execute this processing is stored in the program ROM of the ROM 104 and executed under the control of the CPU 102.

This processing starts upon powering on the image forming apparatus 100. In step S901, the menu screen (Fig. 4A) is displayed on the display unit 224 of the operation panel 110. The process advances to step S902. The user selects the "system management setting" 401 out of the items in the menu screen and presses the OK key 215. The system management setting screen shown in Fig. 4B is thus displayed. When the user selects the "communication management setting" 411 from the items of the system management setting and presses the OK key 215, the communication management setting screen shown in Fig. 4C is displayed (step S903). In step S904, when the user selects the "memory reception setting" 421 out of the items in the communication management setting screen, the memory reception setting screen shown in Fig. 5A is displayed.

In step S905, the memory reception mode setting screen shown in Fig. 5A presents "ON" and "OFF" and allows the user to select one of them. When the user designates "ON", the process advances to step S906 to display the memory reception setting screen shown in Fig. 5B. In step S907, when the user selects the "determine" 541 by the cursor and presses the OK key 215, the memory reception mode setting is completed. On the other hand, when the user designates "OFF" in step S905, memory reception setting cancel processing is executed.

In this way, the memory reception mode can be set using the operation panel 110 of the image forming apparatus 100.

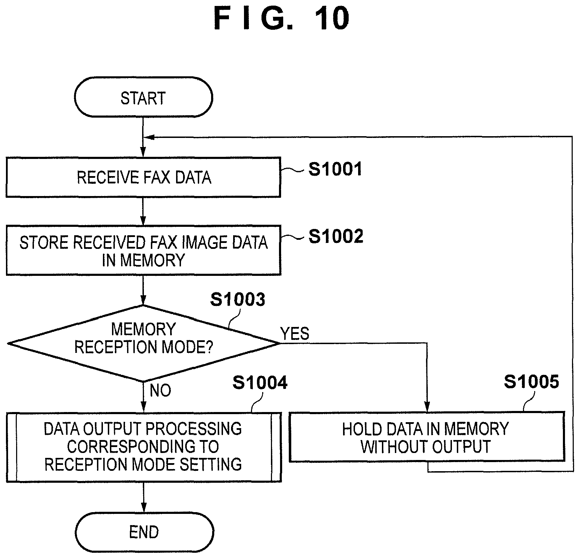

Fig. 10 is a flowchart for explaining FAX reception processing in the image forming apparatus 100 according to this embodiment. The program to execute this processing is stored in the program ROM of the ROM 104 and executed under the control of the CPU 102.

This processing starts upon powering on the image forming apparatus 100. In step S1001, the CPU detects FAX data reception. The process advances to step S1002 to store the received FAX data in the memory (RAM 103). The process advances to step S1003 to confirm whether the memory reception mode setting has been done (whether the memory reception mode is set). If the mode is not set, the process advances to step S1004 to output the FAX data in accordance with the reception mode setting. On the other hand, upon determining in step S1004 that the memory reception mode is set, the process advances to step S1005 to hold the data in the memory. Without outputting the received data, the process returns to step S1001 to wait for the next received data.

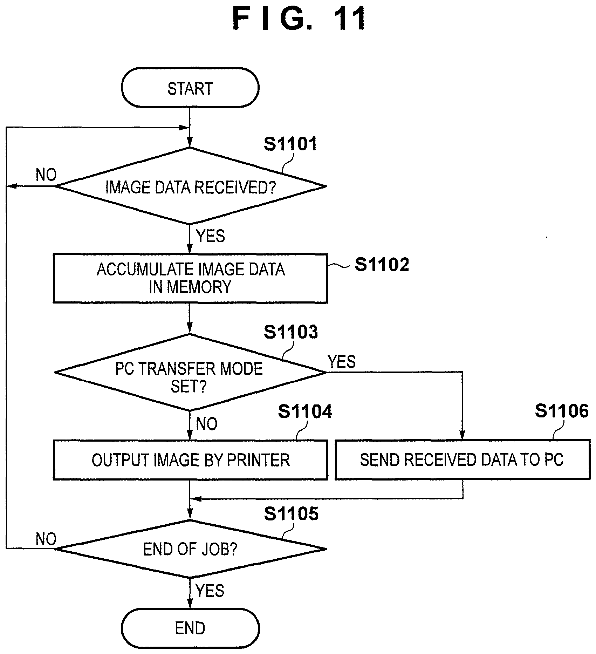

Fig. 11 is a flowchart for explaining image output processing by the image forming apparatus 100 according to the embodiment. The program to execute this processing is stored in the program ROM of the ROM 104 and executed under the control of the CPU 102.

In step S1101, the CPU waits for FAX data received from the telephone public circuit network 114 through the line I/F 112. Upon receiving FAX data, the process advances to step S1102 to store the received FAX data in the memory (RAM 103). The process advances to step S1103 to determine whether the PC transfer mode to transfer FAX data to a PC is set. If the PC transfer mode is not set, the process advances to step S1104 to cause the printing unit 107 to print the FAX data. On the other hand, upon determining in step S1103 that the PC transfer mode is set, the process advances to step S1106 to send the stored FAX data to a preset PC, as described with reference to Figs. 3A to 3D. In step S1105, if no subsequent job exists, the job ends.

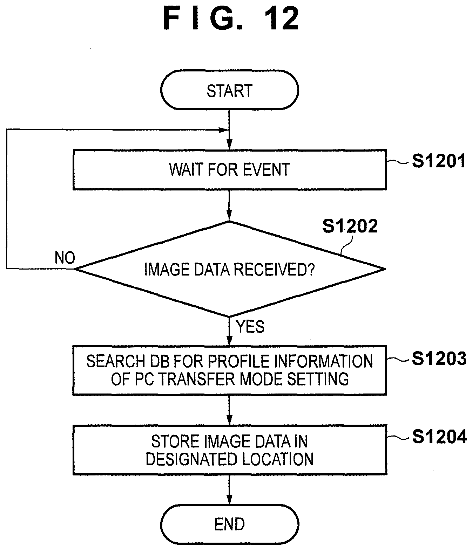

Fig. 12 is a flowchart for explaining the processing of the PC 200 according to this embodiment. The program to execute this processing is expanded on the memory 203 and executed under the control of the CPU 201.

In step S1201, the CPU waits for an access request (event) from the image forming apparatus 100. When an event has occurred, the process advances to step S1202 to determine whether the event is FAX data reception from the image forming apparatus 100. If the event is not the FAX data reception, the process returns to step S1201. If the event is the FAX data reception, the process advances to step S1203 to store the received data in the memory 203. The CPU accesses the profile DB 220 and searches for the profile information of PC transfer mode setting. The process then advances to step S1204. The image processing application 210 performs image processing based on the profile information for the received data and stores the processed image data in a designated location.

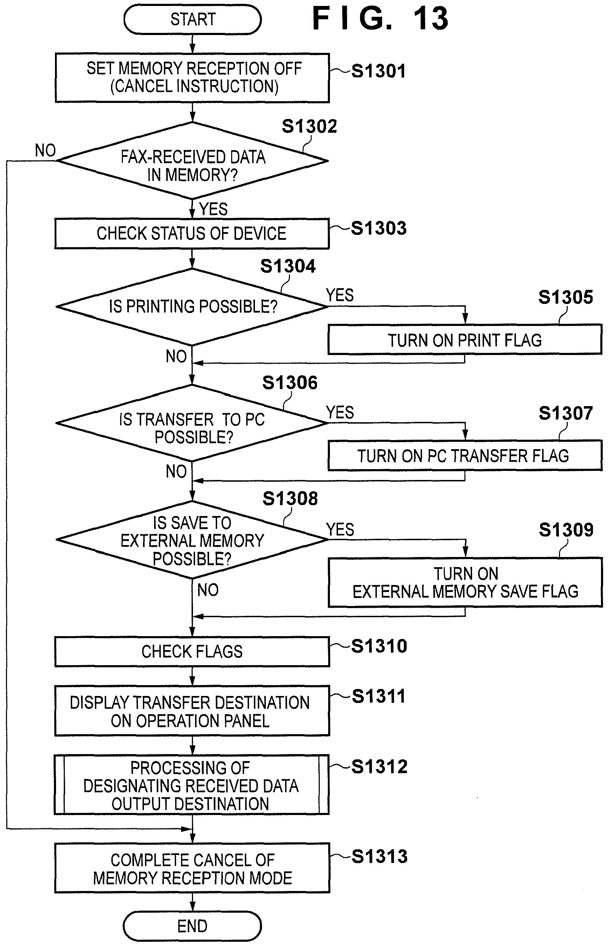

Fig. 13 is a flowchart for explaining processing when the user has instructed to cancel the memory reception mode in the image forming apparatus 100 according to the first embodiment. The program to execute this processing is stored in the program ROM of the ROM 104 and executed under the control of the CPU 102. In the first embodiment, all received data accumulated in the memory (RAM 103) in the memory reception mode are sent at once (output at once) to a desired output destination.

In step S1301, when the user selects "OFF" in the memory reception setting screen shown in Fig. 6A, a memory reception setting cancel request is issued. The process advances to step S1302 to determine whether FAX data are accumulated in the memory (RAM 103). If data are accumulated, the process advances to step S1303 to check the status of the image forming apparatus 100. Upon determining in step S1302 that no FAX data are accumulated, the process advances to step S1313 to cancel the memory reception mode.

The process advances from step S1303 to step S1304 to determine, based on the result of status check of the image forming apparatus 100, whether printing of the stored FAX data is possible. If printing is possible, the process advances to step S1305 to turn on a print flag (provided in the RAM 103) and then advances to step S1306. Upon determining in step S1304 that printing is impossible, the process advances to step S1306 to determine whether transfer to a PC is possible. If transfer is possible, the process advances to step S1307 to turn on a PC transfer flag (provided in the RAM 103) and then advances to step S1308. Upon determining in step S1306 that transfer to a PC is impossible, or after step S1307 has been executed, the process advances to step S1308 to determine whether save to the external memory is possible. Upon determining that save is not possible, the process advances to step S1310. However, if it is determined that save is possible, the process advances to step S1309 to turn on an external memory save flag (provided in the RAM 103).

The process advances to step S1310 to check the above-described flags. The display is controlled so as to display the output destination with the flag on, as shown in Figs. 6A to 6F (step S1311). If there is a flag in the off state, the output destination corresponding to the flag grays out (see Fig. 6D) to prohibit selection of the output destination. In step S1312, when the user selects the desired output destination, the accumulated FAX data are output to the designated output destination. The process advances to step S1313 to cancel the memory reception mode.

As described above, according to the first embodiment, it is possible to output FAX data stored in the memory reception mode to an output destination desired by the user. It is also possible to prevent the user from selecting output processing inexecutable in the image forming apparatus.

### [Second Embodiment]

The second embodiment of the present invention will be described next. In the second embodiment, a case will be explained in which FAX data accumulated in a memory in the memory reception mode are sent to output destinations designated for the respective data. Note that the arrangements of an image forming apparatus 100 and a PC 200 according to the second embodiment are the same as in the above-described first embodiment, and a description thereof will be omitted.

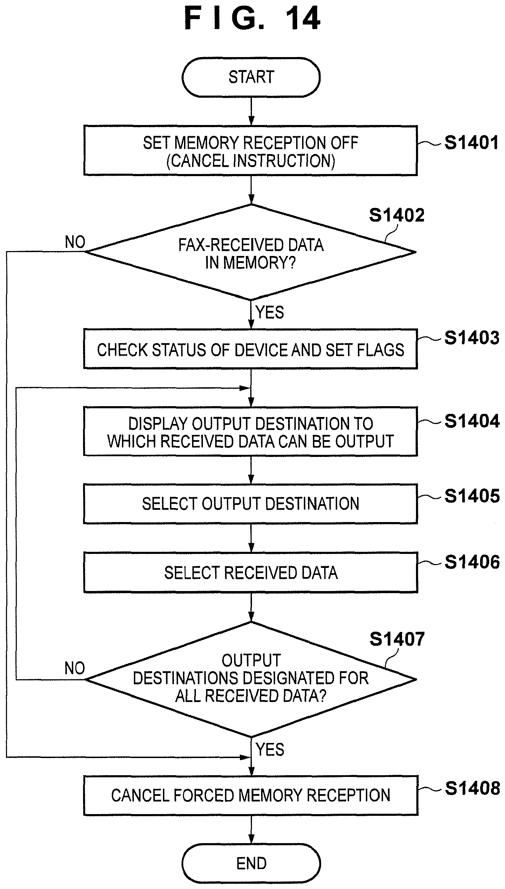

Fig. 14 is a flowchart for explaining processing when the user has instructed to cancel the memory reception mode in the image forming apparatus 100 according to the second embodiment. The program to execute this processing is stored in the program ROM of a ROM 104 and executed under the control of a CPU 102.

In step S1401, when the user selects "OFF" in the memory reception setting screen shown in Fig. 6A, a memory reception setting cancel request is issued. The process advances to step S1402 to determine whether FAX data are accumulated in the memory (RAM 103). If no data are accumulated, the process advances to step S1408. If data are accumulated, the process advances to step S1403 to check the status of the image forming apparatus 100 and set various kinds of flags. The processing of step S1403 is the same as that of steps S1303 to S1310 shown in Fig. 13 described above, and a description thereof will be omitted.

The process advances to step S1404 to display, on a display unit 224 of an operation panel 110, a list of output destinations to which the accumulated FAX data can be output, based on the status of the image forming apparatus 100 and the various kinds of flags. The processing up to this point is the same as in the first embodiment.

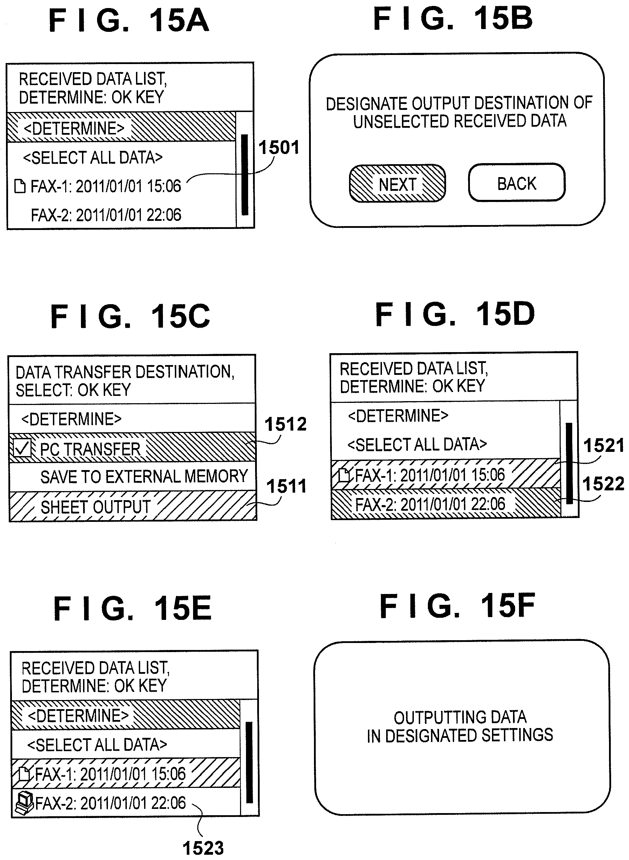

Next, the process advances to step S1405 to display a data list screen shown in Fig. 15A. When the user selects one of the output destinations in step S1405, a screen to select received data to be sent to the output destination is displayed in step S1406.

Figs. 15A to 15F show views for explaining examples of screens displayed on the operation panel 110 in step S1406.

Fig. 15A shows an example of a screen to select received data stored in the memory (RAM 103). In this screen, the popup screen shown in Fig. 6B is displayed if received data are accumulated in the memory (RAM 103) after the instruction to cancel the memory reception mode. When individually designating the accumulated received files (facsimile-received data) after the screen is displayed, the screen shown in Fig. 15A is displayed. Reference numeral 1501 denotes FAX data (FAX-1) designated to be printed on a sheet.

Fig. 15B shows a popup screen displayed when data whose output destination is not designated exists among the received data accumulated in the memory. Fig. 15C shows an example of an output destination setting screen to designate the output destination of the received data whose output destination is not yet selected. Since "sheet output" 1511 is already selected, it cannot be selected (grays out). In Fig. 15C, "PC transfer" 1512 is selected. However, if the same output destination can be set for the respective data, it is unnecessary to prohibit selection of the already selected output destination, as in Fig. 15C.

Fig. 15D shows an example of a screen to select received data to be subjected to the PC transfer selected in Fig. 15C. Data 1521 whose output destination is already determined grays out. Other data 1522 are selectable.

Fig. 15E shows a received data list screen generated by adding the data 1522 for which the PC transfer is designated in Fig. 15D to the screen shown in Fig. 15A. The manner the output destinations are presented is not particularly limited.

Fig. 15F shows an example of a popup screen (progress screen) displayed when the output destinations of all the received data are determined as in Figs. 15A to 15E, and the stored received data are actually being output.

Referring back to Fig. 14, when the output destination of each data is decided in the above-described way, it is determined in step S1407 whether the output destinations of all the received data accumulated in the memory (RAM 103) are designated. If the output destinations are determined not for all the received data, the process returns to step S1404 to repeat the above-described processing.

When the output destinations of all the received data are designated, the process advances to step S1408 to output the received data to the designated output destinations. When the output is completed, the memory reception mode is canceled.

As described above, according to the second embodiment, it is possible to designate the output destination for each of accumulated received data and output the received data to the designated output destinations.

Although not described in the above embodiment, there may be a choice to delete received data from the memory (RAM 103) without output. In addition, display of the list of data output destinations is not limited to that in the above the embodiment.

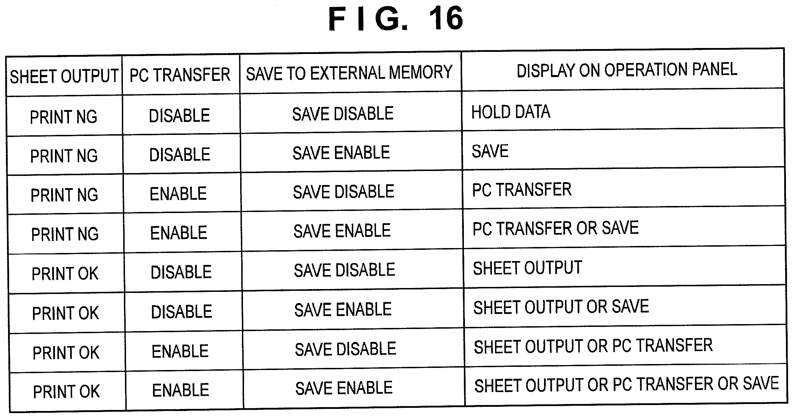

Fig. 16 is a view for explaining a display example on the operation panel 110 based on status check in step S1403 of Fig. 14.

For "sheet output", it is determined whether the image forming apparatus 100 is in a print enable state. If printing is possible, "print OK" is set. Otherwise, "print NG" is set. For "PC transfer", it is determined whether a PC to which data can be transferred is selectable. If selection is possible, "enable" is set. Otherwise, "disable" is set. For "save to external memory", the presence/absence of connection of an external memory is determined. If save is possible, "save enable" is set. Otherwise, "save disable" is set. The list of output destinations to be displayed on the display unit 224 of the operation panel 110 is decided based on the determination results.

For example, if "print NG", "PC transfer disable", and "save disable" are set, the received data remains held in the memory. If "print NG", "PC transfer disable", and "save enable" are set, display is done to save the received data to the external memory. In a similar manner, the output destinations to which the received data can be output are displayed on the display unit 224 of the operation panel 110 as a list of output destinations.

### [Other Embodiments]

Screen display of the above-described embodiments is merely an example, and the present invention is not limited to this. For example, "gray-out" in the explanation of the embodiments may be replaced with "non-display", or any other display method may be adopted to prohibit selection by the user.

Aspects of the present invention can also be realized by a computer of a system or apparatus (or devices such as a CPU or MPU) that reads out and executes a program recorded on a memory device to perform the functions of the above-described embodiment(s), and by a method, the steps of which are performed by a computer of a system or apparatus by, for example, reading out and executing a program recorded on a memory device to perform the functions of the above-described embodiment(s). For this purpose, the program is provided to the computer for example via a network or from a recording medium of various types serving as the memory device (for example, computer-readable medium).

While the present invention has been described with reference to exemplary embodiments, it is to be understood that the invention is not limited to the disclosed exemplary embodiments. The object of the present invention is achieved with the features of the claims.

Since the output destination of accumulated received data cannot arbitrarily be designated in accordance with cancel of a memory reception mode, the memory reception mode cannot be canceled if an error has occurred at the output destination. An image forming apparatus (100) of the present invention, which is capable of facsimile reception, displays (S1312) a selection screen to cause a user to select the output destination of received data stored in a storage unit (103) in accordance with cancel (S1301) of the memory reception mode in which facsimile-received data is stored in the storage unit, and outputs (S1312) the received data to an output destination selected by the user from output destinations displayed in the selection screen.

## Claims

1. An image forming apparatus (100) capable of facsimile reception, comprising:
reception means (112) for receiving data which is transmitted from another apparatus by facsimile;
storage means (103) for storing, while the image forming apparatus is set in a memory reception mode, the data received by said reception means without printing the received data until a user's instruction; and
acceptance means (110) for accepting a cancel instruction for cancelling the memory reception mode;
**characterized in that** the image forming apparatus further comprises:
display control means (102) for displaying a selection screen to allow a user to select, from a plurality of output destinations including printing means of the image forming apparatus, an output destination to which the data stored in said storage means while the image forming apparatus is in the memory reception mode is to be output in accordance with the cancel instruction accepted by said accepting means; and
control means (102) for controlling to output, in accordance with the cancel instruction accepted by said acceptance means, the data in said storage means to the output destination selected by the user from output destinations displayed in the selection screen,
wherein the display control means (102) is configured to display, in case where the plurality of output destinations are unusable in accepting the cancel instruction, a message representing that the memory reception mode cannot be canceled.

2. The apparatus according to claim 1, wherein
said storage means stores a plurality of data received by said reception means, and
said control means controls to output the plurality of data at once to the output destination selected by the user from the output destinations displayed in the selection screen.

3. The apparatus according to claim 1, wherein
said storage means stores a plurality of data received by said reception means,
said display control means displays a selection screen to allow the user to select an output destination to which each of the plurality of data stored in said storage means while the image forming apparatus is in the memory reception mode is to be output in accordance with the cancel instruction accepted by said acceptance means, and
said control means controls to output each of the plurality of data to a corresponding one of the output destinations selected by the user from the output destinations displayed in the selection screen.

4. The apparatus according to any one of claims 1 to 3, further comprising determination means (102) for determining, from the plurality of output destinations, an output destination to which the image forming apparatus can output the data,
wherein said display control means displays the output destination determined by said determination means as the output destination to which the image forming apparatus can output the data so that the output destination is selectable in the selection screen.

5. The apparatus according to any one of claims 1 to 4, wherein the plurality of output destinations further include at least one of an external information processing apparatus connected to the image forming apparatus and an external memory connected to the image forming apparatus.

6. An image forming apparatus control method of controlling an image forming apparatus (100) capable of facsimile reception, comprising:
a reception step of receiving data which are transmitted from another apparatus by facsimile;
a storage control step of, while the image forming apparatus is set in a memory reception mode, storing the data received in said reception step in a memory (103) without printing the received data until a user's instruction;
acceptance step of accepting a cancel instruction for cancelling the memory reception mode;
**characterized in that** the image forming apparatus control method further comprises:
a display control step (S1311) of displaying a selection screen to allow a user to select, from a plurality of output destinations including printing means of the image forming apparatus, an output destination to which the data stored in the memory (103) while the image forming apparatus is in the memory reception mode is to be output in accordance with the cancel instruction accepted in said acceptance step; and
a control step (S1312) of controlling to output, in accordance with the cancel instruction accepted in said acceptance step, the data in the memory to the output destination selected by the user from output destinations displayed in the selection screen,
wherein in the display control step (S1311), in case where the plurality of output destinations are unusable in accepting the cancel instruction, a message representing that the memory reception mode cannot be canceled is displayed.

7. A computer program comprising instructions which, when executed by a computer, cause the image forming apparatus according to any one of claims 1-5 to carry out the steps of the method according to claim 6.

## Patentansprüche

1. Bilderzeugungsvorrichtung (100), die zu einem Faksimile-Empfang fähig ist, mit
einer Empfangseinrichtung (112) zum Empfangen von Daten, die von einer anderen Vorrichtung über Faksimile gesendet werden,
einer Speichereinrichtung (103) zur Speicherung der durch die Empfangseinrichtung empfangenen Daten, während die Bilderzeugungsvorrichtung in einen Speicherempfangsmodus versetzt ist, ohne die empfangenen Daten bis zu einer Benutzeranweisung zu drucken, und
einer Annahmeeinrichtung (110) zum Annehmen einer Aufheben-Anweisung zum Aufheben des Speicherempfangsmodus,
**dadurch gekennzeichnet, dass** die Bilderzeugungsvorrichtung ferner umfasst
eine Anzeigesteuereinrichtung (102) zum Anzeigen eines Auswahlbildschirms, um einem Benutzer die Auswahl eines Ausgabeziels aus einer Vielzahl von Ausgabezielen, die eine Druckeinrichtung der Bilderzeugungsvorrichtung enthalten, zu ermöglichen, zu dem die Daten, die in der Speichereinrichtung gespeichert werden, während sich die Bilderzeugungsvorrichtung in dem Speicherempfangsmodus befindet, gemäß der durch die Annahmeeinrichtung angenommenen Aufheben-Anweisung auszugeben sind, und
eine Steuereinrichtung (102) zur Steuerung zur Ausgabe der Daten in der Speichereinrichtung gemäß der durch die Annahmeeinrichtung angenommenen Aufheben-Anweisung zu dem Ausgabeziel, das durch den Benutzer aus auf dem Auswahlbildschirm angezeigten Ausgabezielen ausgewählt wird,
wobei die Anzeigesteuereinrichtung (102) in einem Fall, in dem die Vielzahl von Ausgabezielen beim Annehmen der Aufheben-Anweisung nicht verwendbar ist, zur Anzeige einer Nachricht eingerichtet ist, die darstellt, dass der Speicherempfangsmodus nicht aufgehoben werden kann.

2. Vorrichtung nach Anspruch 1, wobei
die Speichereinrichtung eine Vielzahl von durch die Empfangseinrichtung empfangenen Daten speichert, und
die Steuereinrichtung eine Steuerung zur Ausgabe der Vielzahl von Daten zu dem Ausgabeziel auf einmal durchführt, das durch den Benutzer aus den auf dem Auswahlbildschirm angezeigten Ausgabezielen ausgewählt wird.

3. Vorrichtung nach Anspruch 1, wobei
die Speichereinrichtung eine Vielzahl von durch die Empfangseinrichtung gespeicherten Daten speichert,
die Anzeigesteuereinrichtung einen Auswahlbildschirm anzeigt, um dem Benutzer die Auswahl eines Ausgabeziels zu ermöglichen, zu dem die Vielzahl von Daten, die in der Speichereinrichtung gespeichert werden, während sich die Bilderzeugungsvorrichtung in dem Speicherempfangsmodus befindet, gemäß der durch die Annahmeeinrichtung angenommenen Aufheben-Anweisung jeweils auszugeben sind, und
die Steuereinrichtung eine Steuerung durchführt, die Vielzahl von Daten jeweils zu einem entsprechenden der Ausgabeziele auszugeben, die durch den Benutzer aus den auf dem Auswahlbildschirm angezeigten Ausgabezielen ausgewählt werden.

4. Vorrichtung nach einem der Ansprüche 1 bis 3, ferner mit einer Bestimmungseinrichtung (102) zur Bestimmung eines Ausgabeziels aus der Vielzahl von Ausgabezielen, zu dem die Bilderzeugungsvorrichtung die Daten ausgeben kann,
wobei die Anzeigesteuereinrichtung das durch die Bestimmungseinrichtung bestimmte Ausgabeziel als das Ausgabeziel anzeigt, zu dem die Bilderzeugungsvorrichtung die Daten ausgeben kann, sodass das Ausgabeziel auf dem Auswahlbildschirm auswählbar ist.

5. Vorrichtung nach einem der Ansprüche 1 bis 4, wobei die Vielzahl von Ausgabezielen ferner zumindest eine mit der Bilderzeugungsvorrichtung verbundene Informationsverarbeitungsvorrichtung und einen mit der Bilderzeugungsvorrichtung verbundenen externen Speicher enthält.

6. Bilderzeugungsvorrichtungssteuerverfahren zur Steuerung einer Bilderzeugungsvorrichtung (100), die zu einem Faksimile-Empfang fähig ist, mit
einem Empfangsschritt eines Empfangens von Daten, die von einer anderen Vorrichtung über Faksimile gesendet werden,
einem Speichersteuerschritt eines Speicherns der im Empfangsschritt empfangenen Daten in einem Speicher (103), während die Bilderzeugungsvorrichtung in einen Speicherempfangsmodus versetzt ist, ohne die empfangenen Daten bis zu einer Benutzeranweisung zu drucken,
einem Annahmeschritt eines Annehmens einer Aufheben-Anweisung zum Aufheben des Speicherempfangsmodus,
**dadurch gekennzeichnet, dass** das Bilderzeugungsvorrichtungssteuerverfahren ferner umfasst
einen Anzeigesteuerschritt (S1311) eines Anzeigens eines Auswahlbildschirms, um einem Benutzer die Auswahl eines Ausgabeziels aus einer Vielzahl von Ausgabezielen zu ermöglichen, die eine Druckeinrichtung der Bilderzeugungsvorrichtung enthalten, zu der die Daten, die in dem Speicher (103) gespeichert werden, während sich die Bilderzeugungsvorrichtung in dem Speicherempfangsmodus befindet, gemäß der in dem Annahmeschritt angenommenen Aufheben-Anweisung auszugeben sind, und
einen Steuerschritt (S1312) eines Steuerns, um gemäß der in dem Annahmeschritt angenommenen Aufheben-Anweisung die Daten in dem Speicher zu dem Ausgabeziel auszugeben, das durch den Benutzer aus auf dem Auswahlbildschirm angezeigten Ausgabezielen ausgewählt wird,
wobei in dem Anzeigesteuerschritt (S1311) in einem Fall, in dem die Vielzahl von Ausgabezielen beim Annehmen der Aufheben-Anweisung nicht verwendbar ist, eine Nachricht angezeigt wird, die darstellt, dass der Speicherempfangsmodus nicht aufgehoben werden kann.

7. Computerprogramm mit Anweisungen, die bei Ausführung durch einen Computer die Bilderzeugungsvorrichtung gemäß einem der Ansprüche 1 bis 5 zur Ausführung der Schritte des Verfahrens nach Anspruch 6 veranlassen.

## Revendications

1. Appareil de formation d'image (100) permettant une réception de télécopie, comprenant :
un moyen de réception (112) destiné à recevoir, par télécopie, des données qui sont transmises depuis un autre appareil ;
un moyen de mémorisation (103) destiné à mémoriser, tandis que l'appareil de formation d'image est réglé dans un mode de réception en mémoire, les données reçues par ledit moyen de réception sans imprimer les données reçues jusqu'à une instruction de l'utilisateur ; et
un moyen d'acceptation (110) destiné à accepter une instruction d'annulation ayant pour objet d'annuler le mode de réception en mémoire ;
l'appareil de formation d'image étant **caractérisé en ce qu'**il comprend en outre :
un moyen de commande d'afficheur (102) destiné à afficher un écran de sélection pour permettre à un utilisateur de sélectionner, parmi une pluralité de destinations de sortie comprenant un moyen d'impression de l'appareil de formation d'image, une destination de sortie au niveau de laquelle il convient de délivrer les données mémorisées dans ledit moyen de mémorisation tandis que l'appareil de formation d'image est dans le mode de réception en mémoire, conformément à l'instruction d'annulation acceptée par ledit moyen d'acceptation ; et
un moyen de commande (102) destiné à commander la délivrance, conformément à l'instruction d'annulation acceptée par ledit moyen d'acceptation, des données se trouvant dans ledit moyen de mémorisation au niveau de la destination de sortie sélectionnée par l'utilisateur parmi des destinations de sortie affichées sur l'écran de sélection,
dans lequel le moyen de commande d'afficheur (102) est configuré pour afficher, dans un cas dans lequel la pluralité de destinations de sortie ne peuvent pas être utilisées lors de l'acceptation de l'instruction d'annulation, un message représentant le fait que le mode de réception en mémoire ne peut pas être annulé.

2. Appareil selon la revendication 1, dans lequel
ledit moyen de mémorisation mémorise une pluralité de données reçues par ledit moyen de réception, et
ledit moyen de commande commande immédiatement la délivrance de la pluralité de données au niveau de la destination de sortie sélectionnée par l'utilisateur parmi les destinations de sortie affichées sur l'écran de sélection.

3. Appareil selon la revendication 1, dans lequel
ledit moyen de mémorisation mémorise une pluralité de données reçues par ledit moyen de réception,
ledit moyen de commande d'afficheur affiche un écran de sélection pour permettre à l'utilisateur de sélectionner une destination de sortie au niveau de laquelle il convient de délivrer toutes les données de la pluralité de données mémorisées dans ledit moyen de mémorisation tandis que l'appareil de formation d'image est dans le mode de réception en mémoire, conformément à l'instruction d'annulation acceptée par ledit moyen d'acceptation, et
ledit moyen de commande commande la délivrance de toutes les données de la pluralité de données au niveau de l'une, correspondante, des destinations de sortie sélectionnée par l'utilisateur parmi les destinations de sortie affichées sur l'écran de sélection.

4. Appareil selon l'une quelconque des revendications 1 à 3, comprenant en outre un moyen de détermination (102) destiné à déterminer, parmi la pluralité de destinations de sortie, une destination de sortie au niveau de laquelle l'appareil de formation d'image peut délivrer les données,
dans lequel ledit moyen de commande d'afficheur affiche la destination de sortie déterminée par ledit moyen de détermination en tant que la destination de sortie au niveau de laquelle l'appareil de formation d'image peut délivrer les données de sorte que la destination de sortie puisse être sélectionnée sur l'écran de sélection.

5. Appareil selon l'une quelconque des revendications 1 à 4, dans lequel la pluralité de destinations de sortie comprennent en outre au moins un appareil de traitement d'informations externe connecté à l'appareil de formation d'image et une mémoire externe connectée à l'appareil de formation d'image.

6. Procédé de commande d'appareil de formation d'image pour commander un appareil de formation d'image (100) permettant une réception de télécopie, comprenant :
une étape de réception consistant à recevoir des données qui sont transmises, par télécopie, depuis un autre appareil ;
une étape de commande de mémorisation consistant à, tandis que l'appareil de formation d'image est réglé dans un mode de réception en mémoire, mémoriser les données reçues à ladite étape de réception dans une mémoire (103) sans imprimer les données reçues jusqu'à une instruction de l'utilisateur ;
une étape d'acceptation consistant à accepter une instruction d'annulation ayant pour objet d'annuler le mode de réception en mémoire ;
le procédé de commande d'appareil de formation d'image étant **caractérisé en ce qu'**il comprend en outre :
une étape de commande d'afficheur (S1311) consistant à afficher un écran de sélection pour permettre à un utilisateur de sélectionner, parmi une pluralité de destinations de sortie comprenant un moyen d'impression de l'appareil de formation d'image, une destination de sortie au niveau de laquelle il convient de délivrer les données mémorisées dans la mémoire (103) tandis que l'appareil de formation d'image est dans le mode de réception en mémoire, conformément à l'instruction d'annulation acceptée à ladite étape d'acceptation ; et
une étape de commande (S1312) consistant à commander la délivrance, conformément à l'instruction d'annulation acceptée à ladite étape d'acceptation, des données se trouvant dans la mémoire au niveau de la destination de sortie sélectionnée par l'utilisateur parmi des destinations de sortie affichées sur l'écran de sélection,
dans lequel, à l'étape de commande d'afficheur (S1311), dans un cas dans lequel la pluralité de destinations de sortie ne peuvent pas être utilisées lors de l'acceptation de l'instruction d'annulation, un message représentant le fait que le mode de réception en mémoire ne peut pas être annulé est affiché.

7. Programme d'ordinateur comprenant des instructions qui, lorsqu'elles sont exécutées par un ordinateur, amènent l'appareil de formation d'image selon l'une quelconque des revendications 1 à 5 à mettre en œuvre les étapes du procédé selon la revendication 6.
